# FASCICULE DE BREVET EUROPEEN

(11) **EP 1 888 481 B1**
(45) Date de publication et mention de la délivrance du brevet: **20.04.2011**
(21) Numéro de dépôt: 06764602.6
(22) Date de dépôt: 11.05.2006
(51) Int. Cl.: C04B 28/02, B28B 1/52, C04B 28/14, C04B 40/02, E04B 2/08

(54) **BLOCS EN BOIS AGGLOMERE**
BLÖCKE AUS HOLZAGGLOMERAT
BLOCKS OF WOOD AGGLOMERATE

(30) Priorité: 12.05.2005 FR 0504776
(43) Date de publication de la demande: 20.02.2008
(73) Titulaire: WBLOCK DEVELOPMENT SAS, 69003 Lyon (FR)
(72) Inventeur: Antonioni, Claude, 94410 St Maurice (FR); Vogel, Stéphane, 78110 Le Vesinet (FR)
(74) Mandataire: Becker, Philippe
(86) Numéro de dépôt international: PCT/FR2006/001056
(87) Numéro de publication internationale: WO 2006/120353

(56) Documents cités:
- EP-A- 1 057 601
- WO-A-85/03700
- WO-A-90/15205
- WO-A-92/17416
- WO-A-95/32161
- CH-A5- 611 550
- DE-C1- 10 046 387
- FR-A- 2 680 336
- FR-A1- 2 700 162
- JP-A- 2000 095 553

## Description

La présente invention concerne des blocs en bois aggloméré permettant par un dispositif d'assemblage de réaliser des constructions, ainsi qu'un procédé de fabrication de ces blocs.

Il est connu d'utiliser des granulats de bois de dimension réduite pour en les agglomérant par un liant hydraulique, par exemple un ciment, réaliser par moulage des blocs utilisés pour la construction de bâtiments.

La réalisation de tels blocs est décrite dans le document FR-A-2700162 qui présente un procédé de préparation des granulats de bois et d'agglomération pour notamment réduire les écarts dimensionnels des blocs agglomérés soumis à des conditions climatiques variables. Ce procédé prévoit en complément d'ajouter une charge minérale neutre comme du sable pour améliorer la stabilité dimensionnelle du bloc.

La préparation des granulats est complexe et augmente les coûts de fabrication. L'apport de charge minérale a pour inconvénient notamment d'augmenter la densité de la matière et le poids des blocs et de diminuer l'effet des avantages apportés par le bois qui se trouve dans une proportion réduite dans le composite obtenu, entre autres les qualités d'isolation thermique.

D'autres matériaux en aggloméré contenant du bois ont été mentionnés dans la littérature. Ainsi, la demande WO95/32161 concerne un bloc comprenant 30 à 70 % en poids de bois et 10 à 40 % en poids de ciment. La demande WO90/15205 concerne des éléments agglomérés comprenant des fibres, un ciment et une quantité importante de boues de récupération (jusqu'à 45%). Les blocs ainsi construits sont creux, n'ont pas une résistance importante, et sont destinés essentiellement à la réalisation de coffrages.

La demande WO85/03700 concerne des matériaux agglomérés comprenant du bois, un ciment et des dioxydes de silicium. Ces matériaux ont une densité faible, résultant notamment de l'application d'une pression ponctuelle, et sont destinés essentiellement à la fabrication de panneaux. En outre, l'ajout des dioxydes de silicium alourdit le matériau très fortement et le ramène au poids du béton.

La demande FR2,680,336 concerne la fabrication de palettes alvéolées en agglomérés. Il s'agit encore une fois de matériaux à faible densité, dont la composition n'est pas précisée, et qui ne sont pas adaptés à un usage dans le domaine de la construction.

La demande EP1 057 601 concerne un procédé de fabrication d'un coffre de réception d'un volet roulant par moulage sous pression d'un mélange de bois, de ciment et d'un agent d'inertage chimique. Cette demande vise essentiellement le dispositif de moulage, mais ne fournit aucun détail sur la composition du matériau. En outre, la pression appliquée est partielle et ne permet pas la prise du ciment, de sorte que l'élément moulé est non solide et fragile. Par ailleurs, la présence d'un agent d'inertage chimique induit un risque de pollution.

La demande CH 611 550 mentionne la fabrication de panneaux décoratifs utilisant un aggloméré de bois. Cette demande vise essentiellement le dispositif de moulage, mais ne fournit aucun détail sur la composition du matériau.

Ainsi, il n'existe pas dans l'art antérieur de matériau en aggloméré de bois qui soit adapté à un usage dans le domaine de la construction. Les documents antérieurs visent essentiellement des agglomérés fragiles, ou de faibles densités, destinés à la réalisation de panneaux ou de coffrages, mais non adaptés à la réalisation d'éléments porteurs.

La présente invention a notamment pour but d'éviter ces inconvénients et d'apporter une solution simple, efficace et économique au problème de la réalisation d'un matériau composite fournissant des blocs de bois agglomérés avec une forte proportion de bois et possédant certaines caractéristiques proches de celles du bois brut.

Elle propose à cet effet un bloc en bois aggloméré compressé, comprenant des particules de bois et un liant hydraulique, et présentant avantageusement une densité élevée. Les blocs de l'invention sont avantageusement obtenus par un procédé dans lequel un mélange initial comprenant des particules de bois et un liant hydraulique est maintenu sous pression pendant toute la durée de prise du liant. Les blocs de l'invention présentent d'excellentes propriétés mécaniques, notamment en terme de résistance à la compression, à l'eau et au feu, et sont tout à fait adaptés à un usage comme élément de construction. Ces blocs sont particulièrement avantageux par rapport aux matériaux existants, tels que le béton, notamment en raison de leur poids réduit.

Les blocs de l'invention ont de préférence une densité supérieure à environ 500 kg/m³, typiquement supérieure à 600 kg/m³, de préférence à 800 kg/m³.

Par ailleurs, les blocs de l'invention sont de préférence préparés à partir d'un mélange comprenant au moins 75%, en volume de matière sèche, de particules de bois, de préférence de 75% à 95%, typiquement de 80 à 95%.

En outre, les blocs de l'invention présentent avantageusement une résistance à la compression au poinçonnement supérieure à 3mPa, typiquement pouvant dépasser 10 mPa, pour un bloc de 5cm³.

De préférence, les blocs en bois aggloméré sont produits à partir d'un mélange comprenant, pour un total de 100% représentant le volume de la matière sèche, de 75% à 95% de particules de bois et de 5% à 25% de liant hydraulique, et une quantité d'eau comprise entre 10% et 30% du volume total de la matière sèche.

Le liant hydraulique utilisé peut être à base de ciment, de chaux ou de plâtre, de préférence à base de ciment. A cet égard, il est possible d'utiliser tout type de ciment disponible dans le commerce, comme par exemple des ciments standard (notamment un ciment 32/5 cpj) ou toute autre qualité de ciment.

Dans un mode de réalisation préféré de l'invention, les particules de bois comprennent des copeaux de bois, éventuellement en mélange avec des fibres végétales. Il peut s'agir notamment de copeaux de bois minces, par exemple de copeaux réalisés par les outils coupants de machines outils. Avantageusement, les particules de bois proviennent de bois sains, et sont essentiellement dépourvues d'écorce, d'aubier et/ou de sève. De préférence, les particules de bois proviennent de résineux (tels que pin, sapin, mélèze) ou de bois blancs (tels que le bouleau, le hêtre, le peuplier, l'érable, etc.). On peut naturellement utiliser des mélanges de particules de bois provenant d'arbres différents.

Dans un mode de mise en oeuvre particulier, une proportion des particules de bois est composée de fibres végétales. Ainsi, dans des blocs particuliers selon l'invention, le volume du bois est réduit entre 5% à 25% et compensé du même pourcentage par l'apport de fibres végétales, par exemple de type chanvre, lin, etc. La fibre végétale de chanvre est plus particulièrement utilisée car elle possède en outre un pouvoir fongicide et insecticide naturel, et non chimique.

Ainsi, dans un mode de mis en oeuvre particulier, les blocs en bois aggloméré sont produits à partir d'un mélange comprenant, pour un total de 100% représentant le volume de la matière sèche, de 50% à 90% de copeaux de bois, de 5% à 25% de fibre végétale et de 5% à 25% de liant hydraulique, et une quantité d'eau comprise entre 10% et 30% du volume total de la matière sèche.

Dans un mode de mise en oeuvre particulier, le bloc contient en outre un ou plusieurs adjuvants, permettant d'adapter ou d'améliorer les propriétés des blocs. On peut citer notamment les adjuvants pour la coloration, l'accélération ou le retardement de la prise du liant, l'hydrofugation, l'ignifugation, le traitement fongicide ou insecticide, la fluidification du mélange, un durcissement plus rapide, l'obtention d'un mélange haute performance, des fibres de renfort du bloc aggloméré ou une charge minérale. Tout adjuvant utilisable dans le béton peut être mis en oeuvre dans la présente invention.

Les blocs de l'invention peuvent avoir une forme et une épaisseur variées, selon l'utilisation recherchée (mur porteur, panneau, plancher, toiture, poutre, mobilier urbain ou habitat, etc.).

Un avantage essentiel du bloc aggloméré selon l'invention est qu'il contient une forte proportion de bois, grâce au maintien de la pression, qui permet d'obtenir un matériau dense avec relativement peu de liant. Il présente ainsi des qualités d'isolation proches de celles du bois brut utilisé au départ, ainsi qu'une bonne résistance mécanique qui le rend propre à servir pour la construction de structures porteuses utilisées pour les bâtiments.

Un objet particulier de invention réside ainsi dans un bloc en bois aggloméré compressé, comprenant des particules de bois et un liant hydraulique, obtenu par un procédé dans lequel un mélange initial sec comprenant des particules de bois et un liant hydraulique, est humidifié (par de l'eau) puis versé dans un moule et maintenu sous pression pendant toute la durée de prise du liant.

Un autre objet de invention réside dans un procédé de préparation d'un bloc en bois aggloméré, comprenant les étapes consistant à former ou à verser dans un moule un mélange comprenant des particules de bois et un liant hydraulique, humidifié par de l'eau, puis à appliquer et maintenir le mélange sous pression pendant toute la durée de prise du liant.

De préférence, le mélange initial comprend, pour un total de 100% représentant le volume de matière sèche, de 75% à 95% de particules de bois, de 5% à 25% de liant hydraulique, et une quantité d'eau comprise entre 10% et 30% d'eau du volume total de matières sèches. En outre, comme indiqué précédemment, le mélange peut contenir un ou plusieurs adjuvants choisis par exemple parmi des adjuvants pour la coloration, l'accélération ou le retardement de la prise du liant, l'hydrofugation, l'ignifugation, le traitement fongicide ou insecticide, la fluidification du mélange, un durcissement plus rapide, obtenir un mélange haute performance, des fibres de renfort du bloc aggloméré ou une charge minérale.

La pression appliquée au mélange peut être adaptée par l'homme du métier, selon les propriétés et l'usage recherchés. Dans une variante particulière de mise en oeuvre, elle est inférieure à 1 mPa environ, de préférence inférieure à 0,8 mPa environ, et peut être par exemple de 0,1 mPa.

Un avantage de l'invention est que ce procédé est simple à mettre en oeuvre, ne nécessitant pas de traitement physique ou chimique complexe qui augmenterait les coûts et le temps de mise en oeuvre. Le fait de mélanger les ingrédients à sec, avant d'ajouter l'eau, constitue également un aspect avantageux et important du procédé, permettant l'obtention de blocs particulièrement résistants.

Dans la phase de stockage, les pièces ou les moules peuvent être mis dans une chambre de durcissement afin d'en accélérer le séchage et ainsi de gagner du temps.

Le mélange peut être moulé dans des moules de forme et dimension variées. De préférence, les blocs en bois aggloméré sont moulés dans des moules comportant un couvercle servant au pressage et le moule comporte un moyen de blocage du couvercle à une hauteur déterminée. Ce moyen de blocage du moule peut comporter des pattes bloquant le couvercle par clipsage. Des faces latérales du moule peuvent s'ouvrir pour dégager le couvercle, des moyens de pivotement et des moyens de fixation permettant l'assemblage de ces faces latérales.

Avantageusement, le moule comporte à sa base des trous.

Selon un mode particulier, on utilise des moules multiples, permettant la production en parallèle de plusieurs blocs.

Suivant une variante, le bloc en bois aggloméré constitue un élément de cloison comportant à sa périphérie des languettes ou des rainures pour assurer la liaison avec des blocs juxtaposés.

L'élément de cloison peut être plat. Il peut comprendre sur un de ses bords latéraux des créneaux qui s'emboîtent avec des créneaux d'un autre élément plat.

L'élément de cloison plat peut comporter deux rainures réalisées sur une arrête de deux faces latérales opposées.

Suivant une autre variante, l'élément de cloison peut être courbe.

Suivant une autre variante, l'élément de cloison comporte dans sa partie supérieure un canal longitudinal qui vient en continuité avec le canal des autres éléments juxtaposés horizontalement.

Le bloc en bois aggloméré peut être un élément long formant une poutrelle creuse apte à être remplie d'un liant.

En variante, le bloc en bois aggloméré peut constituer un élément long formant une poutrelle comprenant inséré dans le bois aggloméré un ferraillage longitudinal.

Le bloc en bois aggloméré peut constituer une pièce longiligne d'épaisseur mince ayant une section transversale en arc de cercle formant une voûte.

Le bloc en bois aggloméré peut constituer une pièce supérieure ou inférieure de la pièce voûtée, son contour comprenant un ou des arcs de cercle s'ajustant sur cette pièce voûtée.

Le bloc en bois aggloméré peut constituer une pièce longiligne comprenant des tenons latéralement et des encoches en extrémité afin de s'ajuster avec les pièces voûtées, et ceci pour former des trémies de plancher.

Ainsi, un objet particulier de l'invention réside dans l'utilisation d'un bloc tel que défini précédemment comme élément de construction dans le domaine du bâtiment.

L'invention sera mieux comprise et d'autres caractéristiques et avantages apparaîtront plus clairement à la lecture de la description détaillée ci-après donnée à titre d'exemple et faite en référence aux dessins annexés dans lesquels :
- la figure 1 est une vue d'une partie d'un bâtiment construit avec des blocs suivant l'invention ;
- la figure 2 est une vue d'un bloc standard, les figures 3 et 4 sont des vues en coupe de la figure 2 suivant les plans III et IV ;
- la figure 5 présente une possibilité d'assemblage entre deux blocs standard ;
- la figure 6 présente un bloc d'angle, la figure 7 est une vue en coupe de la figure 6 suivant le plan VII ;
- la figure 8 présente un bloc d'angle suivant une variante, la figure 9 est une vue en coupe de la figure 8 suivant le plan IX :
- la figure 10 présente un bloc de chaînage, la figure 11 est une vue en coupe de la figure 10 suivant le plan XI ;
- la figure 12 présente un bloc de chaînage avec intégration du plancher, la figure 13 est une vue en coupe de la figure 12 suivant le plan XIII ;
- la figure 14 présente un moule pour la réalisation de blocs en bois aggloméré ;
- les figures 15 et 16 présentent des détails du moule de la figure 14 ;
- la figure 17 présente un plancher réalisé en blocs de bois aggloméré ;
- la figure 18 présente un bloc du type hourdi, les figures 19 et 20 sont des vues en coupe suivant les plans XIX et XX ;
- la figure 21 présente une demi poutrelle creuse, la figure 22 présente l'assemblage de deux demi poutrelles entre elles ;
- la figure 23 présente une poutrelle pleine ;
- la figure 24 présente un bloc courbe, les figures 25 à 27 présentent des assemblages comportant des blocs courbes ;
- la figure 28 présente un bloc de chaînage courbe ;
- la figure 29 présente un plancher en bloc de bois aggloméré comprenant des blocs voûtés,
- les figures 30 à 32 présentent des éléments du plancher selon la figure 29 ; et
- la figure 33 présente un moule multiple pour la réalisation de blocs en bois agglomérés ;
- les figures 34 à 38 présentent des détails de moules multiples de la figure 33 ;
- la figure 39 présente une trémie de plancher en blocs voûtés et blocs de trémie ;
- la figure 40 présente un des élément de la trémie de plancher de la figure 39.

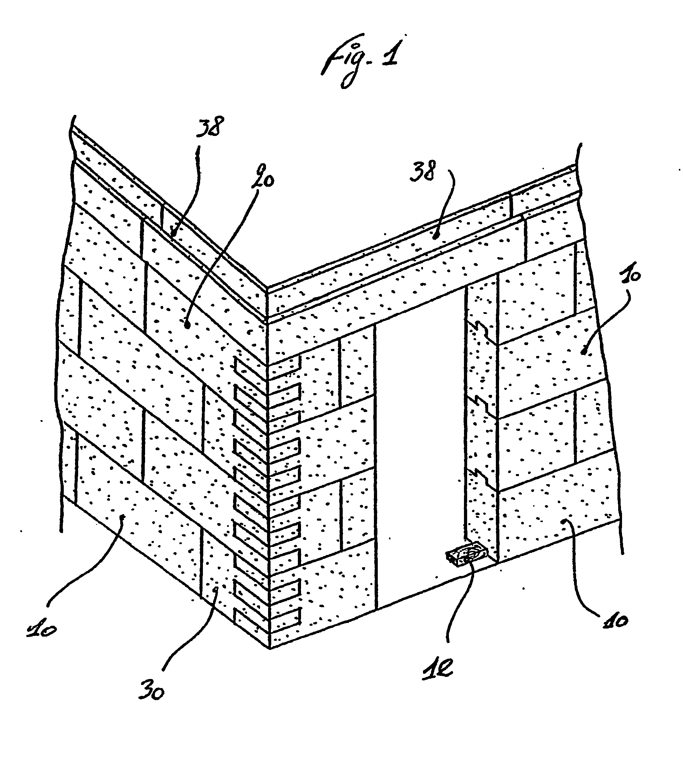

La figure 1 présente schématiquement des parties de cloisons d'un bâtiment construites à partir de blocs réalisés suivant l'invention. Ces blocs forment des éléments porteurs liés ensemble qui permettent d'obtenir une structure rigide capable de supporter le poids d'un édifice. Les cloisons comprennent comme éléments de base des blocs standard 10, des blocs d'angle 20, des demi blocs d'angle 30, et des blocs de chaînage ou de linteau 38.

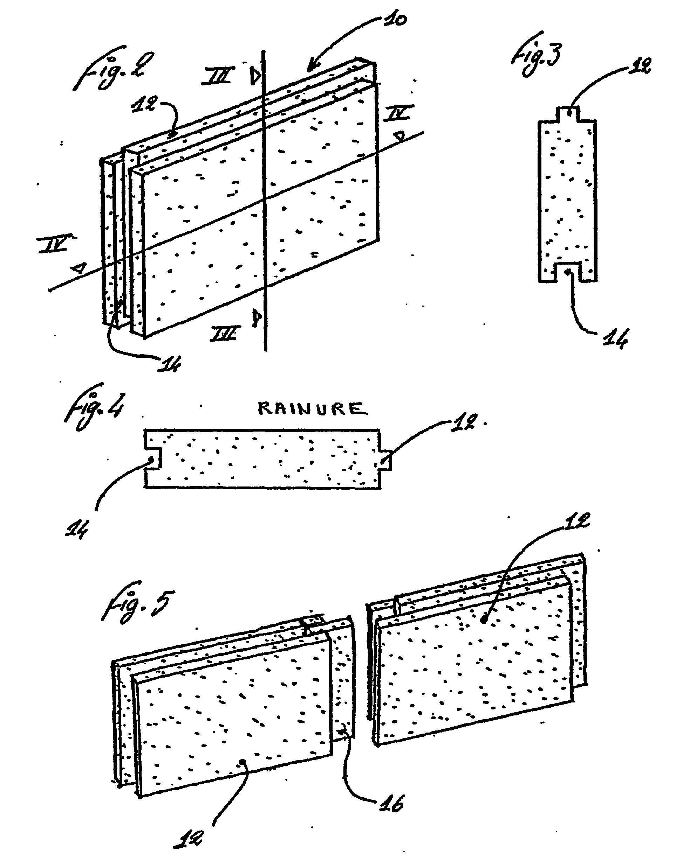

Les figures 2 à 13 détaillent ces différents blocs comprenant des éléments permettant la liaison. Le bloc standard 10 présenté figure 2 et 3 est un élément plat globalement parallélépipédique, les deux grandes faces constituent les faces intérieures et extérieures de la cloison porteuse, l'épaisseur de ce bloc relativement réduite par rapport à sa hauteur et sa largeur représente l'épaisseur de la cloison. Elle est généralement comprise entre 5 et 20 centimètres.

Une languette 12 longitudinale est centrée sur la face supérieure ainsi que sur une face latérale, une rainure 14 longitudinale est aussi centrée sur la face inférieure ainsi que sur l'autre face latérale. Les languettes 12 ont une hauteur et une largeur légèrement inférieure à respectivement la profondeur et la largeur des rainures 14 de manière à permettre un emboîtement de ces languettes 12 dans les rainures 14 pour guider les pièces les unes par rapport aux autres, avec un jeu latérale et un jeu suivant la profondeur pour permettre l'interposition d'un film de colle déposé lors de l'assemblage des éléments.

Par ailleurs, les languettes 12 et les rainures 14 peuvent avoir des faces latérales légèrement inclinées, la largeur de ces éléments se réduisant en s'éloignant de la face du bloc, et les arrêtes extérieures des languettes 12 ou intérieures des rainures 14 peuvent être arrondies pour faciliter le démoulage de ces blocs après la prise du matériau.

D'une manière générale, les éléments de base sont assemblés horizontalement à la suite les uns des autres dans le même sens. Pour certains cas particuliers, ces éléments peuvent être mis en opposition, deux faces latérales comportant des rainures 14 étant misent en regard l'une de l'autre. L'assemblage des blocs 10 est réalisé alors comme présenté figure 5 par une lame de raccordement 16 de même épaisseur qu'une languette et d'une largeur égale à deux fois la hauteur d'une rainure, qui se loge simultanément dans les deux rainures 14 en regard.

Dans un plan vertical, les éléments sont superposés avec de la même manière emboîtement des languettes supérieures dans les rainures inférieures du bloc du dessus. La rainure inférieure de la première rangée de bloc 10 est emboîtée sur un tasseau 12 horizontal fixé au sol qui cale cette première rangée en assurant son positionnement.

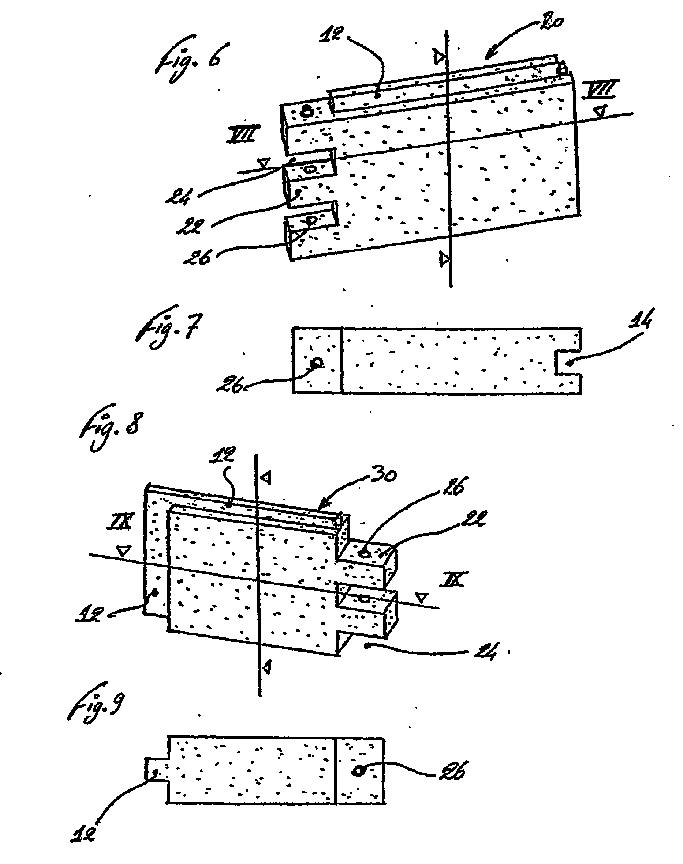

Les figures 6 et 7 présentent des blocs d'angle 20, les figures 8 et 9 des demi blocs d'angle 30. Le bloc d'angle 20 est similaire à un bloc standard, mais la face latérale opposée à celle possédant une rainure 14 comporte suivant sa hauteur une succession de trois créneaux 22 d'une largeur sensiblement égale à la largeur des creux 24 intermédiaires. La hauteur de ces créneaux 22 est sensiblement égale à l'épaisseur du bloc 20. Ces créneaux 22 viennent s'insérer dans des creux complémentaires 24 réalisés sur la face latérale opposée à celle possédant une languette 12 d'un autre demi bloc d'angle 30, ces creux 24 alternant avec deux créneaux 22. De cette manière, lors de l'assemblage des blocs d'angle 20 et 30, tout le volume compris entre les faces extérieures et intérieures des cloisons est rempli.

Pour renforcer la liaison des deux cloisons formant l'angle, une tige verticale est introduite après assemblage des blocs d'angle dans des perçages verticaux 26 situés au centre des créneaux 22 dans les deux séries de blocs et de demi blocs d'angle 20 et 30, le diamètre de ce perçage permettant l'enrobage de cette tige par une colle pour réaliser un scellement de l'ensemble.

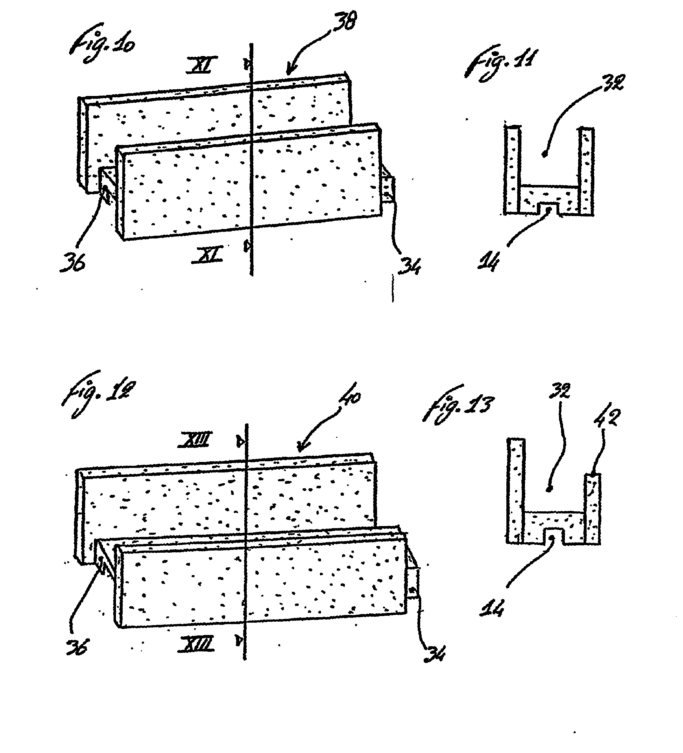

Les figures 10 à 13 présentent des blocs 38, 40 réalisant le chaînage horizontal d'une cloison ou la réalisation de linteaux placés au dessus d'une ouverture. Ces blocs 38, 40 ont une hauteur réduite par rapport aux blocs standard et une forme allongée horizontalement. La face inférieure comporte une rainure 14 longitudinale qui reçoit la languette de la face supérieure du bloc situé en dessous. Le dessus forme un canal 32 suivant la longueur du bloc, il est délimité par trois parois relativement minces, la face inférieure et les deux faces latérales.

Les blocs de chaînage 38, 40 sont ajustés les uns aux autres par un tenon 34 situé à l'extrémité d'un bloc qui s'emboîte dans une mortaise 36 située à l'autre extrémité du bloc suivant. De cette manière, un canal continu 32 est réalisé sur le pourtour d'une cloison et en suivant les angles, dans ce canal des fers sont déposés puis un liant est coulé, un béton par exemple, pour réaliser un chaînage. Un long bloc de chaînage peut être utilisé pour enjamber une ouverture et réaliser un linteau.

En variante, un bloc de chaînage 40 particulier peut être utilisé pour l'intégration d'un plancher. Une des parois latérales 42 du bloc de chaînage est moins haute que l'autre, ce décalage permet d'intégrer la liaison d'un plancher horizontal qui vient en appui sur le dessus de cette paroi latérale 42 en comblant la différence de hauteur. Après le coulage du liant dans le canal 32, le chaînage réalise en même temps la liaison avec le plancher.

Le procédé de réalisation des blocs est le suivant. Pour un total de 100% représentant le volume total de la matière sèche, une proportion importante de copeau de bois représentant un volume de l'ordre de 75% à 95% est mélangée à un liant hydraulique, par exemple du ciment, de la chaux ou du plâtre, dont le volume de la matière sèche est de l'ordre de 5% à 25%. Le mélange réalisé à sec est ensuite humidifié. A cet égard, le dosage en eau varie en fonction de la nature des copeaux et de l'essence du bois, il peut être de l'ordre de 10% à 30% du volume total de matières sèches.

Dans un mode de mise en oeuvre particulier, le procédé de réalisation des blocs est le suivant. Pour un total de 100% représentant le volume du bois, de la matière sèche du liant hydraulique et des fibres végétales, une proportion de copeaux de bois représentant un volume de l'ordre de 50% à 90% et une proportion de fibres végétales représentant un volume de l'ordre de 5% à 25% sont mélangés à un liant hydraulique, par exemple du ciment, de la chaux ou du plâtre, dont le volume de la matière sèche est de l'ordre de 5% à 25%. Le dosage en eau varie en fonction de la nature des copeaux et de l'essence du bois, il peut être de l'ordre de 10% à 30% du volume total des matières sèches (liant hydraulique, copeaux de bois et fibre végétale).

Ensuite ce mélange humide est versé dans un moule puis est fortement comprimé dans une proportion en volume comprise par exemple entre 5% et 50%, pour rendre le matériau très compact. Sous l'effet de cette forte pression, la plus grande partie de l'air résiduel est éliminé ce qui forme un bois aggloméré compact. Le maintien de la pression jusqu'à la prise du liant est essentiel pour garder la compacité de l'aggloméré, les copeaux fortement comprimés et imbriqués les uns dans les autres ayant tendance à se redresser par élasticité tant que le liant n'a pas figé la forme finale. C'est forte compression maintenue donne un matériau dense apportant des caractéristiques intéressantes, notamment une bonne tenue à la compression au poinçonnement, avec une valeur supérieure à 3 mPa, typiquement de l'ordre de 3 à 12 mPa, par exemple supérieure à 5, 6, 7 ou 8 mPa, mesurée sur un bloc de 5 cm³. Cette valeur est égale à celle du bois suivant leur essence, un pouvoir d'isolation thermique proche de celui du bois, une tenue au feu améliorée par la forte densité et par l'enrobage du bois par le liant.

De plus, les faces du bloc fortement comprimées contre les parois du moule sont pratiquement lisses et suivent des reliefs qui peuvent être réalisés sur les parois, ce qui permet de réaliser des blocs finis directement après démoulage avec des faces lisses comportant des décors en relief. Ces blocs ont une densité comprise entre 500 à 1200 kg / m3 qui est nettement plus faible que celle des blocs de béton aggloméré, ce qui facilite leur manipulation et réduit le poids propre des structures. On peut aussi réaliser des blocs couvrant chacun une surface de cloison plus grande pour assurer un montage plus rapide. De plus, comme pour le bois, ces blocs peuvent être coupés, percés, et recevoir des clous ou des vis.

En complément, différents adjuvants peuvent être ajoutés pour l'accélération ou le retardement de la prise du liant, la coloration du matériau, son hydrofugation, son ignifugation, le traitement fongicide ou insecticide, la fluidification du mélange, pour un durcissement plus rapide ou pour obtenir un mélange haute performance. Des compléments peuvent être aussi ajoutés pour renforcer la tenue mécanique du bloc, comme des fibres métalliques (acier cranté, ondulé, fonte amorphe inoxydable), des fibres synthétiques (fibres de verre, de carbone, de polypropylène). Des fibres optiques donnant un effet lumineux peuvent être ajoutées pour la décoration. Une charge minérale comme du sable ou de la fumée de silice peut être incorporée dans le mélange pour augmenter la dureté du bloc. Cependant, l'ajout d'une telle charge n'est pas un mode préféré de réalisation car augmentant le poids du matériau qui ainsi devient équivalent au béton.

De préférence, le bois fragmenté incorporé provient des industries de la menuiserie, de l'ébénisterie ou de la charpente et constitue les copeaux minces laissés par les outils coupants de machines outils comme une raboteuse, une défonceuse, une toupie, une mortaiseuse, une perceuse. Ces copeaux sont alors de bonne qualité, sans écorce ni aubier, venant de bois sains et relativement secs. Ils ne nécessitent pas de traitement ni de séchage avant l'emploi. Ces copeaux minces confèrent au bloc une souplesse et une bonne stabilité dimensionnelle.

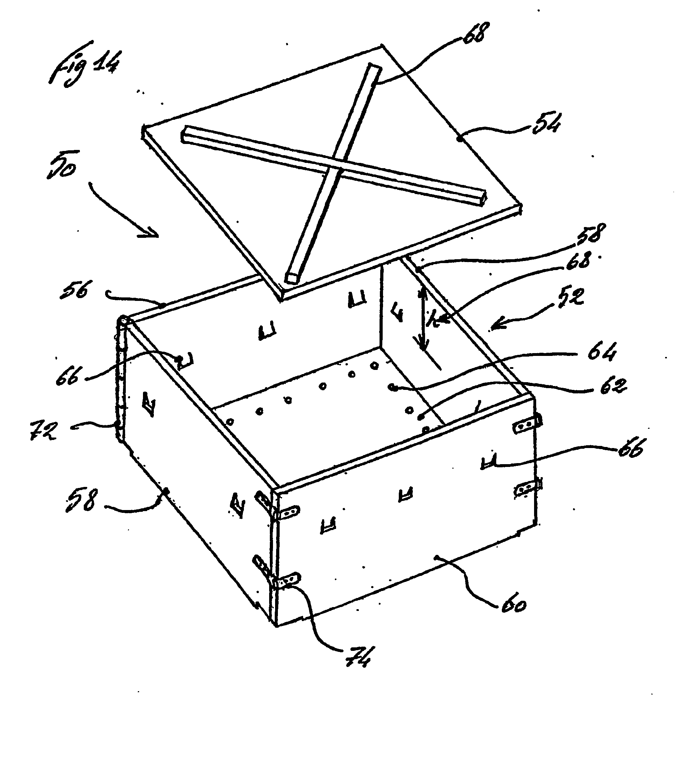

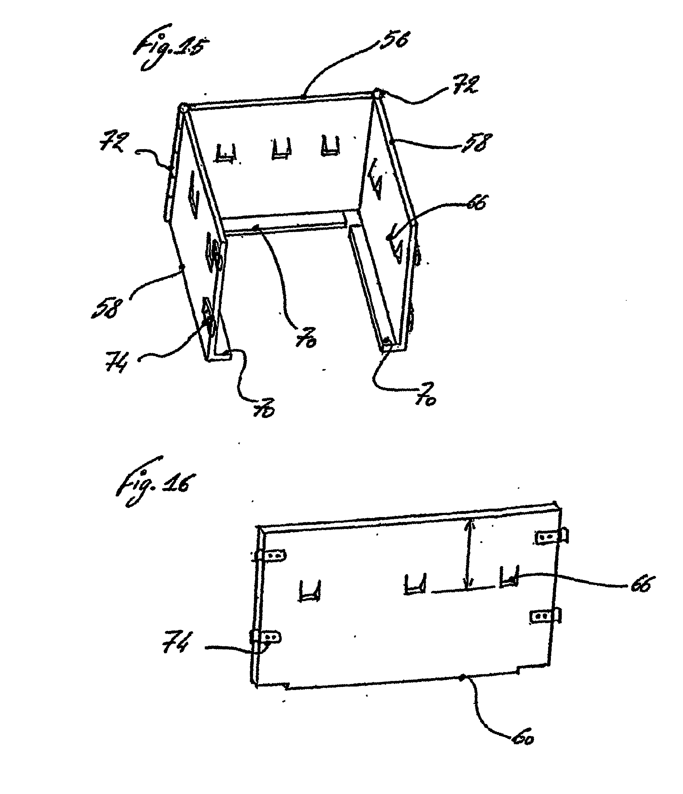

Les figures 14 à 16 représentent un exemple de moule 50 utilisé pour la réalisation de blocs agglomérés suivant l'invention. Il comporte une base 52 de forme parallélépipédique ouverte sur le dessus qui est refermée par un couvercle 54, ces différents éléments sont réalisés à partir de tôles. La base 52 comporte un fond 62 percé de petits trous 64 pour l'évacuation de l'air et du trop plein d'eau dans la matière, ce fond est en appui sur des rebords 70 inférieures des côtés 56, 58, 60 formés par un pli de la tôle des côtés tourné vers l'intérieur de la base 52. Le contour du fond 62 comporte des chanfreins tournés vers la face inférieure du fond, qui s'ajustent sur les rayons formés par les plis des tôles des côtés pour permettre un bon appui de la tôle du fond sur les rebords inférieurs 70 des côtés.

A une hauteur h 68 du dessus de la base 52 se trouve l'extrémité inférieure de pattes élastiques 66 formées par des découpes des tôles des côtés 56, 58, 60, ces extrémités inférieures rentrent légèrement vers l'intérieur de la base 52. Pour la compression de la matière préalablement coulée dans la base 52 formant moule, une presse agit verticalement sur le couvercle 54 rigidifié par des nervures 68 qui descend dans la base 52. Après une descente d'une hauteur h qui correspond au taux de compression choisi pour cette matière, le couvercle 54 repousse les pattes élastiques 66 vers l'extérieure pour former son passage, puis une fois arrivé en dessous, ces pattes 66 reprennent par élasticité leur place et réalisent un verrouillage du couvercle 54 qui ne peut plus remonter. La pression de la presse peut être relâché, le couvercle 54 est mis en place par clipsage et maintient la pression pendant toute la durée de prise du liant.

Ce procédé de réalisation avec un moule 50 maintenant la pression par lui-même est particulièrement intéressant, car après une compression par la presse les blocs dont le liant est en cours de prise sont évacués et stockés sur une aire d'attente libérant la presse qui peut continuer à comprimer les moules suivants.

Pour le démoulage du bloc après la prise du liant, le moule s'ouvre pour libérer le bloc aggloméré. Les faces latérales 58 du moule sont liées à la face arrière 56 par des charnières 72 et la face avant 60 est liée à chaque face latérale 58 par deux verrous 74. Une fois le liant pris, les verrous 74 sont ouverts, la face avant 60 est dégagée, les faces latérales 58 pivotent sur leurs charnières 72 ce qui libère le couvercle 54 des pattes 66, le bloc aggloméré est sorti et le moule peut être remis en configuration pour le moulage suivant.

A partir du même principe comprenant notamment un système de blocage rapide de la face du moule utilisée pour la compression, par clipsage par exemple, de nombreuses formes peuvent être réalisées comme par exemple des blocs d'angle 20, 30 , des blocs de chaînage 38, 40 ,ou des blocs 17 à 23.

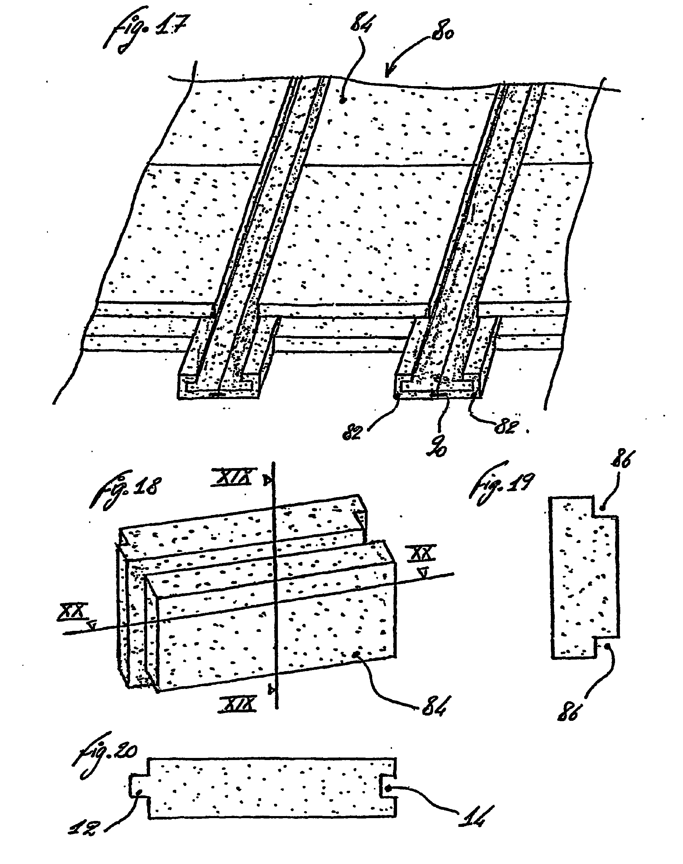

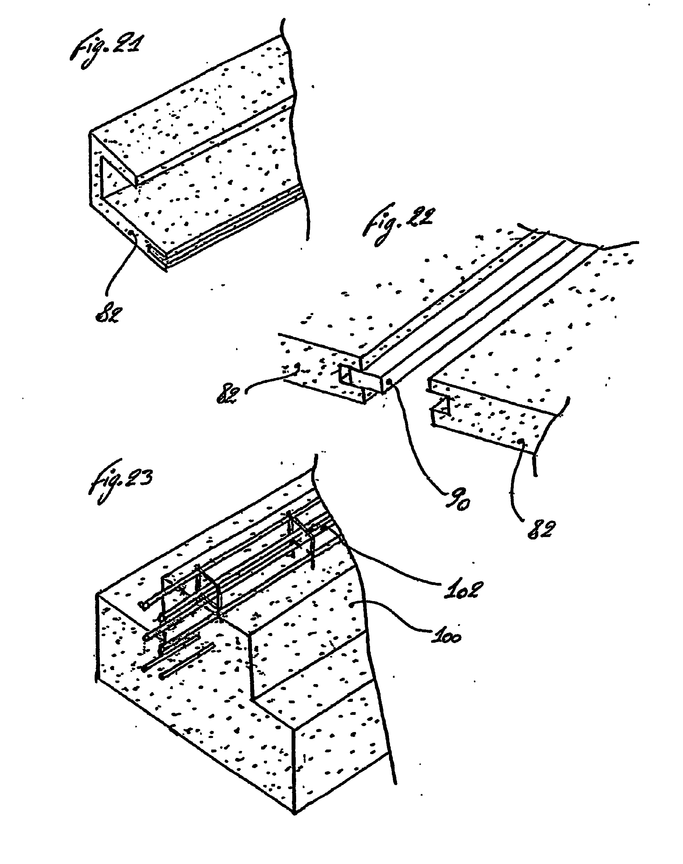

D'autres exemples de réalisation de blocs sont donnés par les figures 17 à 23 qui présentent des blocs agglomérés utilisés pour la réalisation de planchers porteurs. La figure 17 montre un plancher 80 comportant des demi poutrelles 82 assemblées deux par deux symétriquement par rapport à un plan longitudinal vertical. Les figures 21 et 22 détaillent cet assemblage, les demi poutrelles 82 ont globalement la forme d'un « U » posé à plat, les ouvertures des U sont en regard l'une de l'autre, les ailes inférieures se rejoignent et sont ajustées par une lame 90 emboîtée dans des rainures formées dans chacune de ces ailes. Les ailes supérieures sont plus courtes, elles supportent des blocs réalisant un garnissage ou hourdis 84 qui comportent des rainures 86 réalisées sur une arrête de deux faces latérales opposées et recevant ces demi poutrelles 82 pour réaliser un dessous du plancher 80 plat.

Les hourdis 84 comportent par ailleurs sur leurs deux autres faces latérales une languette 12 et une rainure 14 pour assurer la liaison entre eux. Une fois l'ensemble des hourdis 84 posés sur les demi poutrelles 82, un ferraillage non représenté ici est disposé dans le creux des poutrelles puis un liant à base de ciment par exemple est coulé pour remplir ces creux, ce liant peut couvrir ensuite tout le plancher pour réaliser une dalle de compression.

Les demi poutrelles 82 peuvent être d'une seule longueur, ou composées de plusieurs longueurs standard misent bout à bout et disposées en quinconce.

La figure 23 représente en variante une poutrelle 100 pré-assemblée. Sa section transversale a la forme générale d'un « T » inversé, un ferraillage longitudinal 102 est intégré dedans lors du coulage du mélange à base de copeaux de bois, avant la compression qui formera suivant l'invention un bloc aggloméré. La partie supérieure laisse une partie du ferraillage 102 dégagée, celle-ci dépasse au dessus des hourdies 84 et sera prise dans la dalle de compression coulée ensuite.

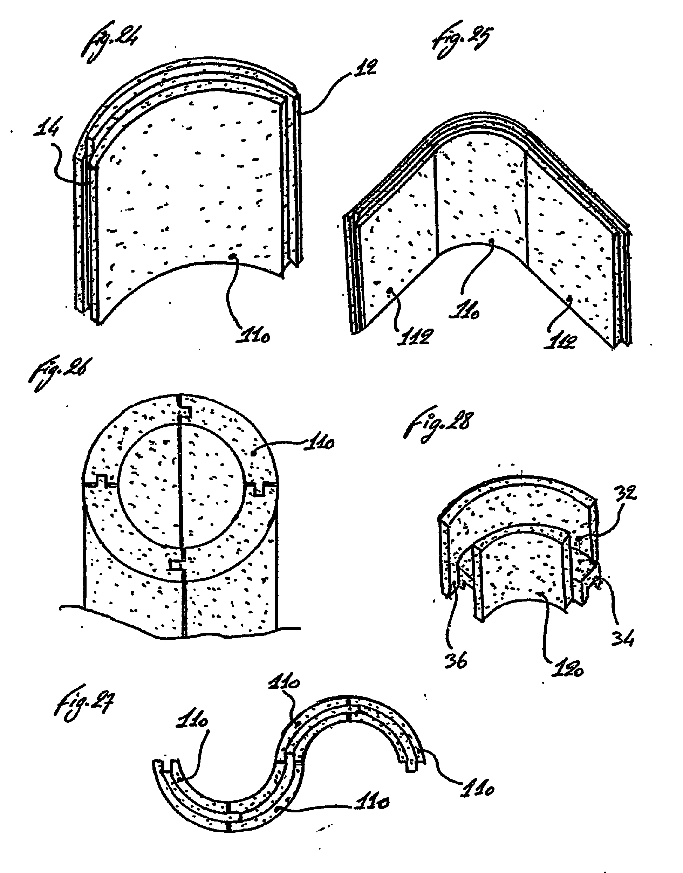

Les figures 24 à 27 présentent des blocs agglomérés courbes 110. Comme pour les blocs plats 10, ces blocs courbes 110 disposent de deux grandes faces constituant les parois intérieure ou extérieure d'une cloison, mais ces faces sont courbées dans un plan horizontal. Les faces latérales comportent chacune une languette 12 ou une rainure 14, la face supérieure comporte une languette 12 et la face inférieure une rainure 14.

Ces blocs courbes 110 peuvent être assemblés dans un plan horizontal avec de part et d'autre des blocs plats 112, le bloc courbe formant un angle arrondi entre deux cloisons planes comme présenté figure 25. Les blocs courbes 110 peuvent aussi être assemblés par séries de quatre, les faces concaves toutes tournées du même côté comme présenté figure 26, pour former un poteau circulaire. En complément un béton peut être coulé à l'intérieur de ce poteau avec un ferraillage vertical pour le renforcer.

Un autre assemblage possible est présenté par la figure 27, les blocs courbes 110 sont disposés horizontalement par séries de deux blocs tournés dans un sens suivis de deux blocs tournés dans l'autre sens. On réalise ainsi une cloison de forme ondulée qui peut servir par exemple pour réaliser un mur anti-bruit.

La figure 28 présente un bloc aggloméré 120 servant de chaînage au dessus d'un bloc courbe 110, ses rayons intérieur et extérieur s'ajustant sur ceux du bloc courbe. Le bloc de chaînage 120 comporte sur sa face inférieure une rainure qui reçoit la languette supérieure du bloc courbe 110 situé en dessous, un tenon 34 situé à une extrémité du bloc s'emboîte dans une mortaise 36 située à l'extrémité en regard du bloc suivant, de la même manière une mortaise 36 est présente à l'autre extrémité. Le dessus forme un canal 32 délimité par deux parois relativement minces. Le dessus de la paroi intérieure peut être plus basse pour intégrer la liaison d'un plancher, comme pour le bloc de chaînage présenté par les figures 12 et 13.

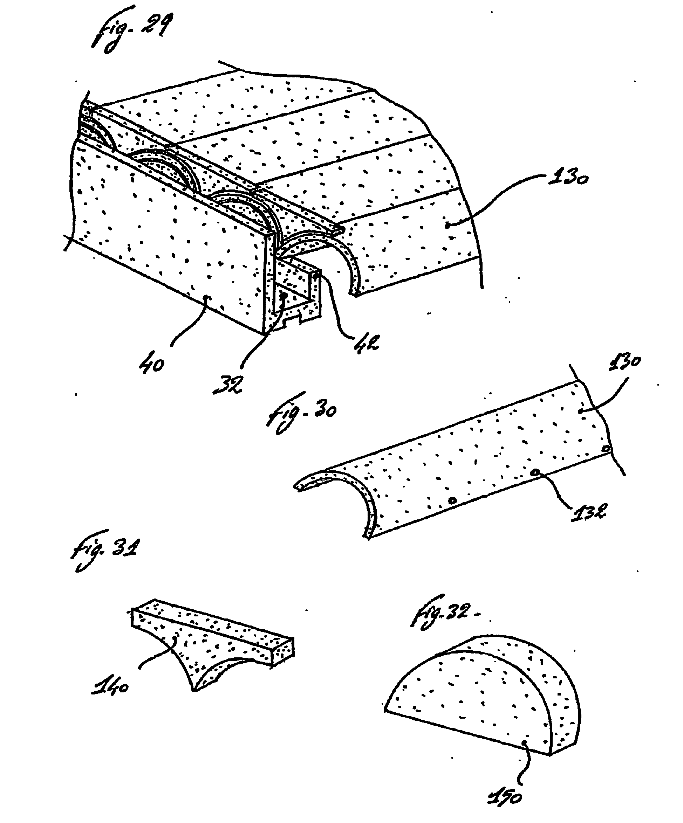

Les figures 29 à 32 présentent un plancher comprenant une série de pièces de bois aggloméré longilignes 130 juxtaposés les unes à côté des autres, posées à leurs extrémités sur les parois latérales 42 moins hautes d'une succession de blocs de chaînage 40 faisant partie des cloisons. Les pièces longilignes 130 couvrent toute la surface du plancher, elles ont une section transversale en arc de cercle formant chacune une petite voûte d'épaisseur mince qui donne de la rigidité à la pièce longiligne 130 et lui permet d'être autoporteuse. Des trous de liaison 132 sont réalisés sur les flancs des pièces voûtées 130 pour lier ces pièces ensemble par des boulons par exemple, afin de garantir un alignement de ces pièces et d'améliorer la rigidité de l'ensemble. La hauteur totale de la pièce voûtée 130 permet de rattraper au moins en partie la différence de hauteur de la paroi latérale 42 moins haute par rapport à l'autre paroi latérale du bloc de chaînage 40.

Des éléments supérieurs 140 ou inférieurs 150 sont placés suivant une orientation transversale en bout des pièces longilignes voûtées 130 pour fermer latéralement le canal 32 des blocs de chaînage 40. L'élément supérieur 140 a sur sa face inférieure symétriquement un contour formant deux arcs de cercle couvrant chacun la moitié d'une pièce voûtée 130, les dessus de ces éléments 140 sont alignés et forment un plan horizontal placé plus haut que le dessus des pièces voûtées 130. L'élément inférieur 150 s'emboîte en dessous d'une pièce voûtée 130, sa partie basse alignée avec celle de la pièce voûtée 130 dans un même plan horizontal repose sur la paroi latérale 42 du bloc de chaînage 140.

Ce plancher autoporteur peut être utilisé tel quel ou servir de soubassement à une dalle de béton coulée dessus pour réaliser un plancher de plus forte résistance. Dans ce cas, les éléments supérieurs 140 sont retirés pour permettre la liaison entre le béton du canal 32 et celui de la dalle. Un ferraillage longitudinal peut être inséré dans les creux formés entre deux pièces voûtées 130.

En variante, le plancher réalisé avec les pièces voûtées 130 peut recevoir un renfort formé d'un tissu de fibres, par exemple des fibres de verre ou de carbone, qui est collé directement sur la face supérieure ou inférieure des pièces voûtées.

Par ailleurs, ces creux au dessus entre deux pièces voûtées 130 comme ceux en dessous sous une voûte forment des dégagements qui permettent de passer des fils ou des canalisations pour l'équipement du bâtiment.

D'une manière générale, les blocs en bois agglomérés réalisés suivant l'invention peuvent comporter des creux pour réduire la quantité de matière utilisée et le poids. Ils peuvent aussi comporter des perçages suivant l'épaisseur ou des rainures en surface qui misent bout à bout d'un bloc à l'autre constituent des passages pour des gaines électriques ou des canalisations par exemple.

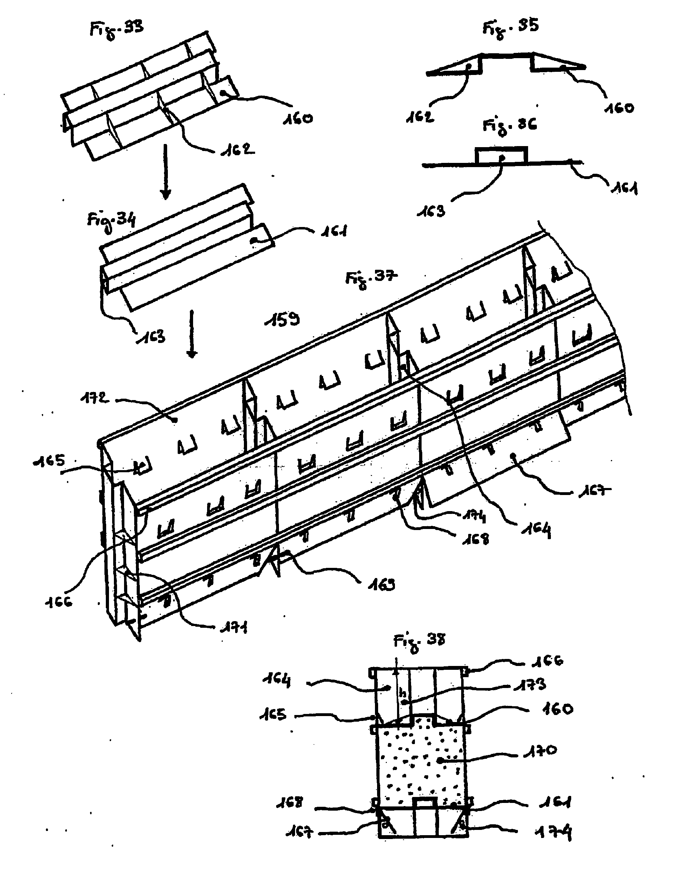

Les figures 33 à 38 présentent un exemple de moule 159 multiple pour la réalisation de blocs agglomérés suivant l'invention. Il comporte deux côtés parallèles 172 et deux autres côtés parallèles 164 formant un parallélépipède ouvert sur le dessous pour le passage du fond 161, et ouvert sur le dessus pour le passage du couvercle 160. Ces différents éléments sont typiquement réalisés à partir de tôles. Les côtés 172 comportent des pattes élastiques 165 formées par les découpes des tôles, dont l'extrémité inférieure est située par rapport au dessus à une hauteur 173. Les côtés 172 comportent en partie basse un élément 167 pivotant sur un axe déterminé par les charnières 168. Les côtés 172 comportent des renforts 166 pour éviter la déformation au pressage. Les côtés 172 se raccordent avec les côtés 164, et sont maintenus par fixation ou soudage. Les côtés 164 comportent dans les angles en partie basse un trou pour placer un clavette 169 servant au blocage de l'élément 167 pivotant. Les côtés 164 en extrémité du moule peuvent recevoir des renforts 171 pour éviter une déformation au pressage. Le fond 161 comporte des renforts 163 pour éviter une déformation au pressage. Le fond 161 descend par pression entre les côtés 172 et 164, repousse les pattes élastiques 165 vers l'extérieur pour former son passage, vient buter sur les éléments 167 pivotants bloqués par les clavettes 169. La matière 170 à compresser est coulée ensuite. Le couvercle 160 comporte des renforts 162 pour éviter une déformation au pressage, celui-ci est à son tour descendu par pression entre les côtés 172 et 164 pour comprimer la matière 170 à une hauteur h 173 correspondant aux taux de compression choisi. Le couvercle 160 repousse les pattes élastiques 165 vers l'extérieur pour former son passage puis, une fois arrivé en dessous, les pattes 165 reprennent leur place par élasticité et réalisent un verrouillage du couvercle 160 qui ne peut plus remonter. La pression de la presse peut être relâchée car le couvercle 160 est mis en place par clipsage et maintient la pression pendant toute la durée de prise du liant.

Ce procédé de réalisation avec un moule 159 multiple maintenant la pression par lui-même est particulièrement intéressant car, après une compression par la presse, les blocs dont le liant est en cours de prise peuvent être évacués et stockés sur une aire d'attente, libérant la presse qui peut continuer à comprimer les moules suivants. Les moules 159 multiples peuvent être juxtaposés les uns à côté des autres pour former des plateaux.

Pour le démoulage du bloc après la prise du liant, les clavettes 169 sont retirées, libérant les éléments 167 qui pivotent et ainsi libèrent le fond 161, le bloc 170 et le dessus 160, qui peuvent être chassés par pression entre les côtés 172 et 164. Le moule peut être remis en configuration pour le moulage suivant.

A partir du même principe comprenant notamment un système de blocage rapide de la face du moule utilisée pour la compression, par clipsage par exemple, de nombreuses formes peuvent être réalisées comme par exemple des blocs d'angle 20, 30, des blocs de chaînage 38, 40, ou des blocs 17 à 23.

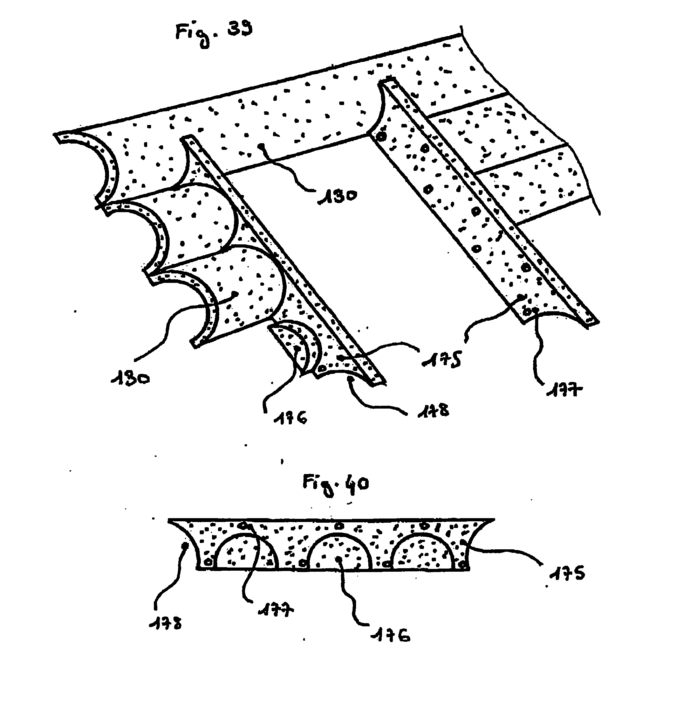

Les figures 39 à 40 présentent une trémie de plancher comprenant une série de pièces de bois aggloméré longilignes 130 juxtaposées les unes à côté des autres, se raccordant sur la pièce de bois aggloméré 175 pour exécuter une trémie de plancher. Cette pièce de bois aggloméré 175 pour trémie de plancher possède latéralement des tenons 176 pour que les pièces voûtées de bois aggloméré 130 viennent reposer dessus, aux extrémités des encoches 178 pour s'adapter sur les pièces voûtées de bois aggloméré 130, et des trous de fixation pour maintenir par des tire-fonds par exemple l'ensemble.

Des exemples spécifiques de blocs selon l'invention ont été réalisés et testés pour leurs propriétés. Les résultats des essais A-D sont fournis ci-dessous :

| **ESSAI** | **Total volume matières sèches** | | **%du volume en eau sur total des matières sèches** | **Résistance compression au poinçonnement** |
|---|---|---|---|---|
| | **Copeaux bois pin** | **Ciment 32,5 CPJ** | | |
| **A** | 92% | 8% | 23% | 2 Mpa |
| **B** | 89% | 11% | 22% | 4,8 Mpa |
| **C** | 84% | 16% | 21% | 5,6 Mpa |
| **D** | 81% | 19% | 16% | 8,2 Mpa |

Ainsi, l'invention permet la réalisation de blocs en bois aggloméré ayant une résistance supérieure au Siporex et pouvant atteindre la résistance d'un bloc béton, tout en ayant une masse volumique bien inférieure à celle du béton.

Des essais de durabilité ont été réalisés avec de l'eau. Un bloc de 5 cm³ a été placé en immersion totale dans de l'eau pendant une durée de 2 mois, et il s'est avéré qu'il n'y a eu aucune dégradation de la matière et aucun changement dimensionnel.

Des essais de durabilité ont également été effectués en immergeant tout d'abord un bloc de 5 cm³ dans de l'eau pendant environ 1 heure, afin qu'il s'imprègne de l'élément liquide, puis en plaçant ensuite ce bloc pendant 2 jours dans un congélateur, afin d'observer son comportement au gel. Il s'avère que la matière du bloc n'a subi aucune dégradation.

Des essais de coloration ont été réalisés en mélangeant à l'eau de gâchage une teinte à l'eau, et la couleur du bloc a été complète sur l'ensemble de la masse.

## Revendications

1. Bloc en bois aggloméré compressé, **caractérisé en ce qu'**il comprend des particules de bois et un liant hydraulique et **en ce qu'**il est obtenu par un procédé dans lequel un mélange initial comprenant des particules de bois et un liant hydraulique est maintenu sous pression pendant toute la durée de prise du liant, les particules de bois représentant au moins 75%, de préférence de 75% à 95%, du volume total de la matière sèche du mélange initial.

2. Bloc en bois aggloméré selon la revendication 1, **caractérisé en ce qu'**il présente une densité supérieure à 500 kg/m³.

3. Bloc en bois aggloméré suivant la revendication 1 ou 2, **caractérisé en ce qu'**il possède une résistance à la compression au poinçonnement supérieure à 3 mPa.

4. Bloc en bois aggloméré suivant l'une des revendications 1 à 3, **caractérisé en ce que** les particules de bois comprennent des copeaux de bois, éventuellement en mélange avec des fibres végétales, de préférence des copeaux de bois minces, plus préférentiellement des copeaux réalisés par les outils coupants de machines outils.

5. Bloc en bois aggloméré suivant l'une des revendications 1 à 4, **caractérisé en ce que** le liant est à base de ciment.

6. Bloc en bois aggloméré suivant l'une des revendications 1 à 3, **caractérisé en ce que** le liant est à base de plâtre

7. Bloc en bois aggloméré suivant l'une des revendications 1 à 3 **caractérisé en ce que** le liant est à base de chaux .

8. Bloc en bois aggloméré suivant l'une des revendications 1 à 5, **caractérisé en ce qu'**il est produit à partir d'un mélange comprenant, pour un total de 100% représentant le volume de la matière sèche, de 75% à 95% environ de particules de bois et de 5% à 25% environ de liant hydraulique, et une quantité d'eau comprise entre 10% et 30% du volume total de la matière sèche.

9. Bloc en bois aggloméré suivant l'une des revendications 1 à 6, **caractérisé en ce qu'**il est produit à partir d'un mélange comprenant, pour un total de 100% représentant le volume de la matière sèche, de 50% à 90% environ de copeaux de bois, de 5% à 25% environ de fibre végétale et de 5% à 25% environ de liant hydraulique, et une quantité d'eau comprise entre 10% et 30% du volume total de la matière sèche.

10. Bloc en bois aggloméré selon l'une des revendications 1 à 9, **caractérisé en ce que** le mélange contient en outre un ou plusieurs adjuvants pour la coloration, l'accélération ou le retardement de la prise du liant, l'hydrofugation, l'ignifugation, le traitement fongicide ou insecticide, la fluidification du mélange ou un durcissement plus rapide.

11. Bloc en bois aggloméré suivant l'une des revendications 1 à 9, **caractérisé en ce que** le mélange contient en outre des fibres de renfort du bloc aggloméré.

12. Bloc en bois aggloméré selon l'une des revendications 1 à 11, **caractérisé en ce qu'**il présente une densité supérieure à 500 kg/m³, de préférence supérieure à 800 kg/m³.

13. Procédé de préparation d'un bloc en bois aggloméré, comprenant les étapes consistant à former ou à verser dans un moule (50) ou (159) un mélange comprenant des particules de bois et un liant hydraulique hydratés par de l'eau, les particules de bois représentant au moins 75%, de préférence de 75% à 95%, du volume total de la matière sèche du mélange initial, puis à appliquer et maintenir le mélange sous pression pendant toute la durée de prise du liant.

14. Procédé selon la revendication 13, **caractérisé en ce que** le mélange est moulé dans un moule (50) comportant un couvercle (54) servant au pressage, et **en ce que** le moule (50) compote un moyen de blocage (66) du couvercle (54) à une hauteur déterminée (68).

15. Procédé selon la revendication 14, **caractérisé en ce que** le moyen de blocage du moule (50) comporte des pattes (66) bloquant le couvercle (54) par clipsage.

16. Procédé selon l'une des revendications 14 à 15, **caractérisé en ce que** des faces latérales (58, 60) du moule (50) s'ouvrent pour dégager le couvercle (54), et **en ce que** des moyens de pivotement (72) et des moyens de fixation (74) permettent l'assemblage de ces faces latérales (58, 60).

17. Procédé selon l'une des revendications 14 à 16, **caractérisé en ce que** le moule comporte à sa base des trous.

18. Procédé selon la revendication 13 , **caractérisé en ce que** le mélange est moulé dans un moule (159) comportant un fond (161) bloqué par deux éléments latéraux pivotants (167) qui sont clavetés (169), un couvercle (160) servant au pressage, et **en ce que** le moule (159) comporte un moyen de blocage (165) du couvercle (160) à une hauteur déterminée (173).

19. Procédé selon la revendication 18, **caractérisé en ce que** le moyen de blocage du fond (161) du moule (159) comporte des éléments latéraux pivotant (167) sur un axe par charnières (168) et un blocage de ceux-ci par clavetage (169).

20. Procédé selon l'une des revendications 18 à 19, **caractérisé en ce que** le moyen de blocage du moule (159) comporte des pattes (165) bloquant le couvercle (160) par clipsage.

21. Procédé selon l'une des revendications 18 à 20, **caractérisé en ce que** les éléments latéraux pivotants (167) sont déclavetés (169) libérant le fond (161), le bloc (170) et le couvercle (160) après la prise du liant.

22. Procédé selon l'une des revendications 18 à 21, **caractérisé en ce que** les moules (159) peuvent être juxtaposés et assemblés les uns à côté des autres.

23. Bloc en bois aggloméré suivant l'une des revendications 1 à 13 ou susceptible d'être obtenu par le procédé selon l'une des revendications 14 à 22, **caractérisé en ce qu'**il constitue un élément de cloison comportant à sa périphérie des languettes (12) ou des rainures (14) pour assurer la liaison avec des blocs juxtaposés.

24. Bloc en bois aggloméré suivant la revendication 23, **caractérisé en ce que** l'élément de cloison est plat (10).

25. Bloc en bois aggloméré suivant la revendication 24, **caractérisé en ce que** l'élément de cloison plat (10) comprend sur un de ses bords latéraux des créneaux (22) qui s'emboîtent avec des créneaux (22) d'un autre élément plat.

26. Bloc en bois aggloméré suivant la revendication 23, **caractérisé en ce que** l'élément de cloison comporte deux rainures (86) réalisées sur une arrête de deux faces latérales opposées.

27. Bloc en bois aggloméré suivant la revendication 23, **caractérisé en ce que** l'élément de cloison est courbe (110).

28. Bloc en bois aggloméré suivant la revendication 23, **caractérisé en ce que** l'élément de cloison (38, 40, 120) comporte dans sa partie supérieure un canal longitudinal (32) qui vient en continuité avec le canal des autres éléments juxtaposés horizontalement.

29. Bloc en bois aggloméré suivant l'une des revendications 1 à 13 ou obtenu par le procédé selon l'une des revendications 14 à 22, **caractérisé en ce qu'**il constitue un élément long (82) formant une poutrelle creuse apte à être remplie d'un liant.

30. Bloc en bois aggloméré suivant l'une des revendications 1 à 13 ou obtenu par le procédé selon l'une des revendications 14 à 22, **caractérisé en ce qu'**il constitue un élément long formant une poutrelle (100) comprenant inséré dans le bois aggloméré un ferraillage longitudinal (102).

31. Bloc en bois aggloméré suivant l'une des revendications 1 à 13 ou obtenu par le procédé selon l'une des revendications 14 à 22, **caractérisé en ce qu'**il constitue une pièce longiligne (130) d'épaisseur mince ayant une section transversale en arc de cercle formant une voûte.

32. Bloc en bois aggloméré suivant l'une des revendications 1 à 22, **caractérisé en ce qu'**il constitue un élément supérieur d'une pièce voûtée (140) ou un élément inférieur d'une pièce voûtée (150) et que son contour comprend un ou des arcs de cercle s'ajustant sur la pièce voûtée (130).

33. Bloc en bois aggloméré suivant l'une des revendications 1 à 13 ou obtenu par le procédé selon l'une des revendications 14 à 22, **caractérisé en ce qu'**il constitue une pièce longiligne (175) avec tenons (176) et encoches (178) pour que les blocs (130) s'adaptent perpendiculairement et en extrémité.

34. Utilisation d'un bloc en bois selon l'une des revendications 1 à 13 ou susceptible d'être obtenu par le procédé selon l'une des revendications 14 à 22, comme élément de construction dans le domaine du bâtiment.

## Claims

1. A block of compressed wood agglomerate, **characterised in that** it comprises particles of wood and a hydraulic binder, and **in that** it is obtained by a process in which an initial mixture comprising particles of wood and a hydraulic binder is kept under pressure throughout the hardening period of the binder, the particles of wood representing at least 75%, preferably from 75% to 95%, of the total volume of dry matter of the initial mixture.

2. A block of compressed wood agglomerate according to claim 1, **characterised in that** it shows a density greater than 500 kg/m³.

3. The block of wood agglomerate as claimed in Claim 1 or 2, **characterized in that** it has a resistance to punching compression greater than 3 mPa.

4. The block of wood agglomerate as claimed in any one of Claims 1 to 3, **characterised in that** the particles of wood comprise wood chips, optionally in a mixture with vegetable fibres, preferably thin wood chips, more preferably shavings made by the cutting tools of machine tools.

5. The block of wood agglomerate as claimed in any one of Claims 1 to 4, **characterised in that** the binder is based on cement.

6. The block of wood agglomerate as claimed in any one of Claims 1 to 3, **characterised in that** the binder is based on plaster.

7. The block of wood agglomerate as claimed in any one of Claims 1 to 3, **characterised in that** the binder is based on lime.

8. The block of wood agglomerate as claimed in any one of Claims 1 to 5, **characterised in that** it is produced from a mixture comprising, for a total of 100% representing the volume of dry matter, from 75% to 95% approximately of particles of wood and from 5% to 25% approximately of hydraulic binder, and a quantity of water between 10% and 30% of the total volume of dry matter.

9. The block of wood agglomerate as claimed in any one of Claims 1 to 6, **characterised in that** it is produced from a mixture comprising, for a total of 100% representing the volume of dry matter, from 50% to 90% approximately of wood chips, from 5% to 25% approximately of fibre vegetable and from 5% to 25% approximately of hydraulic binder, and a quantity of water between 10% and 30% of the total volume of dry matter.

10. The block of wood agglomerate as claimed in any one of Claims 1 to 9, **characterised in that** the mixture also contains one or more adjuvants for dyeing, acceleration or retarding of the hardening of the binder, waterproofing, fireproofing, fungicide or insecticide treatment, liquefaction of the mixture, faster hardening or to produce a high-performance mixture.

11. The block of wood agglomerate as claimed in any one of Claims 1 to 9, **characterised in that** the mixture also contains reinforcing fibres of the block agglomerate.

12. The block of wood agglomerate as claimed in any one of Claims 1 to 11, **characterised in that** it shows a density greater than approximately 500 kg/m³, preferably greater than approximately 800 kg/m³.

13. A process for the preparation of a block of wood agglomerate, comprising the steps consisting of forming or pouring in a mould (50) or (159) a mixture comprising particles of wood and a hydraulic binder hydrated by water, the particles of wood representing at least 75%, preferably from 75% to 95%, of the total volume of dry matter of the initial mixture, then applying and maintaining the mixture under pressure while the binder hardens.

14. The process as claimed in Claim 13, **characterised in that** the mixture is moulded in a mould (50) comprising a cover (54) serving as pressing, and **in that** the mould (50) comprises blocking means (66) of the cover (54) at a determined height (68).

15. The process as claimed in Claim 14, **characterised in that** the blocking means of the mould (50) comprise tabs (66) blocking the cover (54) by clipping.

16. The process as claimed in any one of Claims 14 to 15, **characterised in that** lateral faces (58, 60) of the mould (50) open to disengage the cover (54), and **in that** pivoting means (72) and fixing means (74) assist in assembling these lateral faces (58, 60).

17. The process as claimed in any one of Claims 14 to 16, **characterised in that** the mould comprises holes at its base.

18. The process as claimed in Claim 13, **characterised in that** the mixture is moulded in a mould (159) comprising a bottom (161) blocked by two lateral pivoting elements (167) which are keyed (169), a cover (160) serving as pressing, and **in that** the mould (159) comprises blocking means (165) of the cover (160) at a determined height (173).

19. The process as claimed in Claim 18, **characterised in that** the blocking means of the bottom (161) of the mould (159) comprise lateral pivoting elements (167) on an axis by hinges (168) and blockage of the latter by keyway (169).

20. The process as claimed in any one of Claims 18 to 19, **characterised in that** the blocking means of the mould (159) comprises tabs (165) blocking the cover (160) by clipping.

21. The process as claimed in any one of Claims 18 to 20, **characterised in that** the lateral pivoting elements (167) are loosened (169) releasing the bottom (161), the block (170) and the cover (160) after the binder has hardened.

22. The process as claimed in any one of Claims 18 to 21, **characterised in that** the moulds (159) can be juxtaposed and assembled beside one another.

23. The block of wood agglomerate as claimed in any one of Claims 1 to 13 or obtainable by the process as claimed in any one of Claims 14 to 22, **characterised in that** it constitutes a partition element comprising on its periphery tongues (12) or grooves (14) to ensure binding with juxtaposed blocks.

24. The block of wood agglomerate as claimed in Claim 23, **characterised in that** the partition element is flat (10).

25. The block of wood agglomerate as claimed in Claim 24, **characterised in that** the flat partition element (10) comprises on one of its side edges slots (22) which nest with slots (22) of another flat element.

26. The block of wood agglomerate as claimed in Claim 23, **characterised in that** the partition element comprises two grooves (86) made on an edge of two opposite lateral faces.

27. The block of wood agglomerate as claimed in Claim 23, **characterised in that** the partition element is curved (110).

28. The block of wood agglomerate as claimed in Claim 23, **characterised in that** the partition element (38, 40, 120) comprises in its upper part a longitudinal channel (32) which continues other horizontally juxtaposed elements with the channel.

29. The block of wood agglomerate as claimed in any one of Claims 1 to 13 or obtainable by the process as claimed in any one of Claims 14 to 22, **characterised in that** it constitutes a long element (82) forming a hollow beam to be filled by a binder.

30. The block of wood agglomerate as claimed in any one of Claims 1 to 13 or obtainable by the process as claimed in any one of Claims 14 to 22, **characterised in that** it constitutes a long element forming a beam (100) comprising a longitudinal reinforcement inserted in the wood agglomerate (102).

31. The block of wood agglomerate as claimed in any one of Claims 1 to 13 or obtainable by the process as claimed in any one of Claims 14 to 22, **characterised in that** it constitutes a lengthy piece (130) of minimal thickness having a transversal section in an arc of a circle forming an arch.

32. The block of wood agglomerate as claimed in any one of Claims 1 to 22, **characterised in that** it constitutes an upper element (140) of an arched piece or a lower element (150) of an arched piece, and **in that** its contour comprises one or several arcs of a circle adjusting on the arched piece (130).

33. The block of wood agglomerate as claimed in any one of Claims 1 to 13 or obtainable by the process as claimed in any one of Claims 14 to 22, **characterised in that** it constitutes a lengthy piece (175) with tenons (176) and notches (178) so that the blocks (130) adapt perpendicularly and at the end.

34. The use of a block of wood as claimed in any one of Claims 1 to 13 or obtainable by the process as claimed in any one of Claims 14 to 22, as a construction element in the field of the building.

## Patentansprüche

1. Blockstein aus gepresstem Holzagglomerat, **dadurch gekennzeichnet, dass** er Holzpartikel und ein hydraulisches Bindemittel umfasst und dass er mit einem Verfahren erhalten wird, in dem ein Ausgangsgemisch, umfassend Holzpartikel und ein hydraulisches Bindemittel, während der gesamten Zeit des Abbindens des Bindemittels unter Druck gehalten wird, wobei die Holzpartikel wenigstens 75%, bevorzugt 75% bis 95%, des Gesamtvolumens der Trockenmasse des Ausgangsgemisches ausmachen.

2. Blockstein aus Holzagglomerat gemäß Anspruch 1, **dadurch gekennzeichnet, dass** er eine Dichte größer als 500 kg/m³ aufweist.

3. Blockstein aus Holzagglomerat nach Anspruch 1 oder 2, **dadurch gekennzeichnet, dass** er eine Stempeldruckfestigkeit größer als 3 MPa besitzt.

4. Blockstein aus Holzagglomerat nach einem der Ansprüche 1 bis 3, **dadurch gekennzeichnet, dass** die Holzpartikel Holzspäne, gegebenenfalls mit Pflanzenfasern vermischt, bevorzugt feine Holzspäne, bevorzugter Späne, die mit Schneidwerkzeugen maschinell hergestellt sind, umfassen.

5. Blockstein aus Holzagglomerat nach einem der Ansprüche 1 bis 4, **dadurch gekennzeichnet, dass** das Bindemittel auf Zementbasis ist.

6. Blockstein aus Holzagglomerat nach einem der Ansprüche 1 bis 3, **dadurch gekennzeichnet, dass** das Bindemittel auf Gipsbasis ist.

7. Blockstein aus Holzagglomerat nach einem der Ansprüche 1 bis 3, **dadurch gekennzeichnet, dass** das Bindemittel auf Kalkbasis ist.

8. Blockstein aus Holzagglomerat nach einem der Ansprüche 1 bis 5, **dadurch gekennzeichnet, dass** er aus einem Gemisch hergestellt wird, umfassend, wobei sich die Gesamtsumme von 100% auf das Volumen der Trockenmasse bezieht, ungefähr 75% bis 95% Holzpartikel und ungefähr 5% bis 25% hydraulisches Bindemittel und eine Menge an Wasser zwischen 10% und 30% des Gesamtvolumens der Trockenmasse.

9. Blockstein aus Holzagglomerat nach einem der Ansprüche 1 bis 6, **dadurch gekennzeichnet, dass** er aus einem Gemisch hergestellt wird, umfassend, wobei sich die Gesamtsumme von 100% auf das Volumen der Trockenmasse bezieht, ungefähr 50% bis 90% Holzspäne, ungefähr 5% bis 25% Pflanzenfasern und ungefähr 5% bis 25% hydraulisches Bindemittel und eine Menge an Wasser zwischen 10% und 30% des Gesamtvolumens der Trockenmasse.

10. Blockstein aus Holzagglomerat gemäß einem der Ansprüche 1 bis 9, **dadurch gekennzeichnet, dass** das Gemisch außerdem einen oder mehrere Zusatzstoffe für die Färbung, die Beschleunigung oder Verzögerung des Abbindens des Bindemittels, die Wasserabweisung, die Feuerfestigkeit, die Fungizid- oder Insektizidbehandlung, die Verflüssigung des Gemisches oder für eine schnellere Härtung enthält.

11. Blockstein aus Holzagglomerat nach einem der Ansprüche 1 bis 9, **dadurch gekennzeichnet, dass** das Gemisch außerdem Fasern zur Verstärkung des agglomerierten Blocksteins enthält.

12. Blockstein aus Holzagglomerat gemäß einem der Ansprüche 1 bis 11, **dadurch gekennzeichnet, dass** er eine Dichte größer als 500 kg/m³, bevorzugt größer als 800 kg/m³, aufweist.

13. Verfahren zur Herstellung eines Blocksteins aus Holzagglomerat, umfassend die Schritte, bestehend aus Formen oder Gießen in eine(r) Form (50) oder (159) eines Gemisches, umfassend Holzpartikel und ein hydraulisches Bindemittel, die mit Wasser verflüssigt sind, wobei die Holzpartikel wenigstens 75%, bevorzugt 75% bis 95%, des Gesamtvolumens der Trockenmasse des Ausgangsgemisches ausmachen, anschließend Ausüben und Aufrechterhalten eines Drucks während der gesamten Zeit des Abbindens des Bindemittels.

14. Verfahren gemäß Anspruch 13, **dadurch gekennzeichnet, dass** das Gemisch in einer Form (50) geformt wird, umfassend einen Deckel (54), der dem Pressen dient, und dass die Form (50) ein Mittel zum Arretieren (66) des Deckels (54) bei einer festgelegten Höhe (68) umfasst.

15. Verfahren gemäß einem der Ansprüche 14, **dadurch gekennzeichnet, dass** das Mittel zum Arretieren der Form (50) Laschen (66) umfasst, die den Deckel (54) durch Einklipsen arretieren.

16. Verfahren gemäß einem der Ansprüche 14 bis 15, **dadurch gekennzeichnet, dass** die Seitenflächen (58, 60) der Form (50) sich öffnen lassen, um den Deckel (54) zu entfernen, und dass Mittel zum Schwenken (72) und Mittel zum Befestigen (74) den Zusammenbau dieser Seitenflächen (58, 60) erlauben.

17. Verfahren gemäß einem der Ansprüche 14 bis 16, **dadurch gekennzeichnet, dass** die Form in ihrer Bodenfläche Löcher aufweist.

18. Verfahren gemäß Anspruch 13, **dadurch gekennzeichnet, dass** das Gemisch in einer Form (159) geformt wird, umfassend einen Boden (161) der von zwei schwenkbaren seitlichen Elementen (167) arretiert wird, die verkeilt sind (169), einen Deckel (160), der dem Pressen dient, und dass die Form (159) ein Mittel zum Arretieren (165) des Deckels (160) bei einer festgelegten Höhe (173) umfasst.

19. Verfahren gemäß Anspruch 18, **dadurch gekennzeichnet, dass** das Mittel zum Arretieren des Bodens (161) der Form (159) seitliche Elemente (167), die um eine Achse mithilfe von Scharnieren (168) schwenkbar sind, und eine Arretierung dieser mittels Verkeilen (169) umfasst.

20. Verfahren gemäß einem der Ansprüche 18 bis 19, **dadurch gekennzeichnet, dass** das Mittel zum Arretieren der Form (159) Laschen (165) umfasst, die den Deckel (160) durch Einklipsen arretieren.

21. Verfahren gemäß einem der Ansprüche 18 bis 20, **dadurch gekennzeichnet, dass** die schwenkbaren seitlichen Elemente (167) gelöst werden (169) und den Boden (161), den Blockstein (170) und den Deckel (160) nach dem Abbinden des Bindemittels freigeben.

22. Verfahren gemäß einem der Ansprüche 18 bis 21, **dadurch gekennzeichnet, dass** die Formen (159) nebeneinandergesetzt und Seite an Seite zusammengefügt werden können.

23. Blockstein aus Holzagglomerat nach einem der Ansprüche 1 bis 13 oder mit dem Verfahren gemäß einem der Ansprüche 14 bis 22 erhalten, **dadurch gekennzeichnet, dass** er ein Wandelement bildet, umfassend an seinem Rand Federn (12) oder Nute (14), um die Verbindung mit den anliegenden Blöcken sicherzustellen.

24. Blockstein aus Holzagglomerat nach Anspruch 23, **dadurch gekennzeichnet, dass** das Wandelement flach ist (10).

25. Blockstein aus Holzagglomerat nach Anspruch 24, **dadurch gekennzeichnet, dass** das flache Wandelement (10) an seinen Seitenrändern Fingerzinken (22) umfasst, die mit Fingerzinken (22) eines anderen flachen Elements verzahnen.

26. Blockstein aus Holzagglomerat nach Anspruch 23, **dadurch gekennzeichnet, dass** das Wandelement zwei Nute (86) umfasst, die auf einer Kante zweier gegenüberliegender Seitenflächen ausgebildet sind.

27. Blockstein aus Holzagglomerat nach Anspruch 23, **dadurch gekennzeichnet, dass** das Wandelement bogenförmig ist (110).

28. Blockstein aus Holzagglomerat nach Anspruch 23, **dadurch gekennzeichnet, dass** das Wandelement (38, 40, 120) in seinem oberen Teil einen Längskanal (32) umfasst, der mit dem Kanal der horizontal nebeneinander gesetzten anderen Elemente fortgesetzt wird.

29. Block aus Holzagglomerat nach einem der Ansprüche 1 bis 13 oder mit dem Verfahren gemäß einem der Ansprüche 14 bis 22 erhalten, **dadurch gekennzeichnet, dass** er ein langes Element (82) bildet, das einen Hohlträger bildet, der mit einem Bindemittel gefüllt werden kann.

30. Blockstein aus Holzagglomerat nach einem der Ansprüche 1 bis 13 oder mit dem Verfahren gemäß einem der Ansprüche 14 bis 22 erhalten, **dadurch gekennzeichnet, dass** er ein langes Element bildet, das einen Träger (100) bildet, umfassend eingefügt in das agglomerierte Holz eine Armierung in Längsrichtung (102).

31. Blockstein aus Holzagglomerat nach einem der Ansprüche 1 bis 13 oder mit dem Verfahren gemäß einem der Ansprüche 14 bis 22 erhalten, **dadurch gekennzeichnet, dass** er ein sehr langes Teil (130) minimaler Dicke bildet, das einen kreisbogenförmigen Querschnitt besitzt und eine Wölbung bildet.

32. Blockstein aus Holzagglomerat nach einem der Ansprüche 1 bis 22, **dadurch gekennzeichnet, dass** er ein oberes Element eines gewölbten Teils (140) oder ein unteres Element eines gewölbten Teils (150) bildet, und dass sein Umriss einen Kreisbogen oder -bögen umfasst, die auf das gewölbte Teil (130) passen.

33. Blockstein aus Holzagglomerat nach einem der Ansprüche 1 bis 13 oder mit dem Verfahren gemäß einem der Ansprüche 14 bis 22 erhalten, **dadurch gekennzeichnet, dass** er ein sehr langes Teil (175) mit Zapfen (176) und Aussparungen (178) bildet, damit die Blocksteine senkrecht und an ihrem Ende passend sind.

34. Verwendung eines Blocksteins aus Holz gemäß einem der Ansprüche 1 bis 13 oder mit dem Verfahren gemäß einem der Ansprüche 14 bis 22 erhalten, als Bauelement auf dem Gebiet des Bauwesens.
